# EUROPEAN PATENT SPECIFICATION

(11) **EP 1 398 731 B1**
(45) Date of publication and mention of the grant of the patent: **08.10.2008**
(21) Application number: 03077696.7
(22) Date of filing: 29.08.2003
(51) Int. Cl.: G06K 19/077

(54) **Virtual annotation of a recording on an archival media**
Virtueller Kommentar einer Aufzeichnung auf ein Archivierungsmedium
Annotation virtuelle d'un enregistrement sur un support d'archive

(30) Priority: 09.09.2002 US 161514
(43) Date of publication of application: 17.03.2004
(73) Proprietor: Eastman Kodak Company, Rochester NY 14650-2201 (US)
(72) Inventor: Kerr, Roger S., Eastman Kodak Company, Rochester New York 14650-2201 (US); Schindler,II, Roland R., Eastman Kodak Company, Rochester New York 14650-2201 (US); Tredwell, Timothy J., Eastman Kodak Company, Rochester New York 14650-2201 (US)
(74) Representative: Haile, Helen Cynthia

(56) References cited:
- EP-A- 1 191 389
- WO-A-00/23994
- GB-A- 2 203 699

## Description

The invention relates to methods and systems for annotating an archival medium.

Important writings, images and other content are often preserved by recording the content on an archival medium such as paper or film. Often, it is important that such recordings are preserved in their original form. However, it is also important that annotations to such recordings can be made. Such annotations can include written notes, editing suggestions, voice annotations, video annotations and other forms of annotations that communicate information regarding the content of the recordings or that are otherwise associated with the recordings. Of particular interest to many users is the ability to annotate a recording with notes, comments and markings that highlight areas of interest in the recording and provide content relevant to the areas of interest so that a person observing the original recording can identify the areas of interest and will have access to the annotation.

The need to store detailed information about a recording without modifying the content of the recording is an important requirement when the original recording is used, for example, for medical and legal purposes. An example of such a recording is a diagnostic medical image, such as an image obtained by scanning using x-rays, ultrasound, or computerized axial tomography (CAT). While the diagnostic image preserved on the recording is of value, important annotations are often associated with the recordings that add great value to the diagnostic image. For example, identifying information regarding the patient's name, the patient's physician's name, the testing facility name and the date and time can be associated with the recording of the diagnostic image. Other information such as a physician's opinion regarding the test results can accompany the recording to ensure that the recording is correctly analyzed and tracked. In addition, under certain circumstances, it can be useful to permit a physician to highlight areas of interest in the diagnostic image and record conclusions and findings in association with the highlighted markings. The physician preferably could have the ability to record annotations in a manner that does not cause important information on the diagnostic image to be modified or obscured by the recorded annotations and, in particular, by the markings used to highlight the image.

Thus, what is needed, is a way of physically associating annotations with a recording in a manner that does not require modification of the recording, yet provides the holder of an original recording to see a visual representation of the annotations associated with the recording so that the content and existence of the annotations is apparent when the recording is observed.

Brady, WO 00/23994, discloses an optical storage medium that comprises an optical disk which includes integral information storage and a communication apparatus for storing and communicating information to an external system. The information storage and communication apparatus comprises a circuit including memory for storing information and a communication interface for communicating the information with the external system. Brady similarly does not disclose transmitting image data across a network to a remote device or obtaining annotation data from a remote location and storing that data in the memory on the document.

It is known in the art to associate annotations with a recording by recording such annotations on separate sheets of medium which are then stored in physical association with the recording. Often the medium bearing the recording and the medium during annotations are stored in a common file folder or binder which, in turn, is stored in a storage facility. Each time the recordings or annotations are to be accessed, the medium bearing the recording and other medium in the file must be located physically, removed from storage, taken to the user, reviewed and/or further annotated and then returned to storage. It will be appreciated that this storage system requires a substantial investment in labor and facilities. Further, the movement of medium in and out of such a system creates a risk that important annotations and/or the original recording can be lost in storage or transit.

Alternatively, is known to convert the content of such recordings and the content of any annotations into digital data and to store the digital data in electronic files that can be electronically indexed, accessed and linked. However, in this approach there is no physical association between the recording and the digital files and the holder of the original recording does not have access to these electronic files where the original recording is separated from the electronic files or if the electronic files are otherwise unavailable.

Radio Frequency Identification (RFID) tags having an integrally attached memory that is used to store unique identifying information and a transponder that communicates information stored in the memory with a reading/writing device can be used to provide a link between a recording and an electronic system. The RFID tag is attached to the item to which the identifying information is stored and identifying information can be extracted to identify the item. RFID tags have been proposed for use in applications with passports and credit cards, such as is disclosed in U.S. Patent No. 5,528,222 entitled Radio Frequency Circuit and Memory In Thin Flexible Package to Moskowitz et al. A commercially available "TAG-IT INLAY"^{™} RFID tag available from Texas Instruments, Incorporated, located in Dallas, Texas, USA, can be used to provide identifying information about a medium to which it is attached. This relatively thin, flexible type of RFID tag can be used in any application that previously required a label or bar code. The RFID tags of the prior art are typically used for identification purposes, such as for employee badges, inventory control, and credit card account identification. These devices are useful for tracking the location of, characteristics of and usage of tangible things. For example, such tags can be used to track the location of documents and track the chain of custody of such documents within a document management system.

It is also known to use the memory of an RFID tag to carry data regarding the characteristics of a consumable medium used as the input "raw material" for an image processing apparatus. An example of this is disclosed in commonly assigned co-pending U.S. Pat. Application Ser. No. 09/334,375 entitled "A Printer and Method Therefor Adapted To Sense Data Uniquely Associated With A Consumable Loaded Into the Printer". This co-pending patent application discloses the use of an RFID tag connected to a consumable medium such as a sheet of receiver medium or donor medium. The RFID tag is pre-programmed with information regarding the consumable. With this feature, an image processing apparatus can identify the characteristics of each consumable loaded therein and adapt its operation accordingly to record an optimum image using the consumable.

However, the prior art RFID systems do not teach or suggest the use of RFID tags for document annotation purposes and do not solve the problem of ensuring that annotations to be associated with a recording are available to the holder of the recording.

Also of particular interest to many users is the ability to physically associate annotations such as editing instructions with a recording and to be able to render or otherwise present original and edited versions of the original recording and any other annotations to the recording without modifying or physically accessing the recording. Thus, what is also needed is a method and system for remotely accessing the content of an original recording and remotely creating an annotation version of a recording without modifying the recording.

One aspect of the invention provides a method for annotating a content bearing medium having a memory. The method includes obtaining data representing the content borne on the medium and storing the data representing the content borne in the memory of the medium. The stored data in the memory is conveyed to a location remote from the medium and annotation data is obtained from the remote location. The remotely obtained annotation data is stored in the memory.

In another aspect, the invention provides a method for annotating a plurality of content bearing mediums and includes coupling a transponder having a memory to each one of the mediums, obtaining data representing the content borne on the mediums, storing data representing the content borne on each medium in the memory of the transponder coupled to the medium, archiving the mediums in a storage area. The data stored in the memory of a transponder coupled to a selected one of the mediums, including data representing the content borne on the selected one of the mediums, is conveyed to a location remote from the mediums. Annotation data for association with the selected one of the mediums is remotely obtained. The remotely obtained annotation data is stored in the memory of the transponder coupled to the selected one of the mediums.

In still another aspect, the invention provides a system for virtual annotation of selected ones of a plurality of content bearing mediums. The system has a plurality of transponders with at least one transponder associated with each of the mediums. Each transponder has a memory adapted to store data. A transceiver is adapted to exchange data with selected ones of the plurality of transponders. An input system is adapted to convert content borne on each of the plurality of mediums into content data and to cause the transceiver to store the content data in the memory of the at least one transponder associated with each medium. A remote processor is adapted to cause the transceiver to extract content data from the memory of at least one transponder associated with at least one of the plurality of mediums. The remote processor has an output device for presenting an output based on the extracted content data. The remote processor further has an annotation input for receiving an annotation to the at least one of the plurality of mediums and converting the annotation into data. The remote processor is further adapted to cause the transceiver to store data representing the annotations to the at least one of the plurality of mediums in the memory of the at least one transponder associated with the at least one of the plurality of mediums.

In still another aspect, what is provided is a system for remotely annotating at least one of a plurality of content bearing mediums, each medium having a transponder with a memory and the memory having content data representing the content borne on the medium stored therein. The system has a transceiver adapted to exchange data with the transponders. A remote processor is adapted to cause the transceiver to extract content data stored in the memory of the at least one transponder associated with at least one of the plurality of mediums. The remote processor has an output device for presenting an output based on the content data. The remote processor further has an annotation input for receiving an annotation to the at least one of the plurality of mediums and converting the annotation into data. The remote processor is further adapted to cause the transceiver to store data representing annotations to the at least one of the plurality of mediums in the memory of the at least one transponder associated with the at least one of the plurality of mediums.

While the specification concludes with claims particularly pointing out and distinctly claiming the subject matter of the present invention, it is believed that the invention will be better understood from the following description when taken in conjunction with the accompanying drawings, wherein:
Fig. 1 is a plan view of a medium bearing an original recording, said medium having an attached transponder;
Fig. 2 shows a close up view of a transponder mounted to a medium;
Fig. 3 is a schematic representation showing communication between a transponder and a transceiver, the transponder being attached to a medium;
Fig. 4 is a schematic representation showing use of a hand-held device for exchanging data with a transponder that is attached to a recording;
Fig. 5 is an enlarged plan view of a transponder antenna provided on a medium;
Fig. 6 is a diagram of a transponder integrated circuit to be attached to the transponder antenna shown in Fig. 5;
Fig. 7 shows one embodiment of a system for annotating a recording;
Fig. 8 shows a block diagram of one embodiment of a method for annotating a recording;
Fig. 9 shows a diagram of one embodiment of an output device in accordance with the present invention; and,
Fig. 10 shows a diagram of another embodiment of an output device in accordance with the present invention.

The present description is directed in particular to elements forming part of, or cooperating more directly with, an apparatus in accordance with the invention. It is to be understood that elements not specifically shown or described may take various forms well known to those skilled in the art.

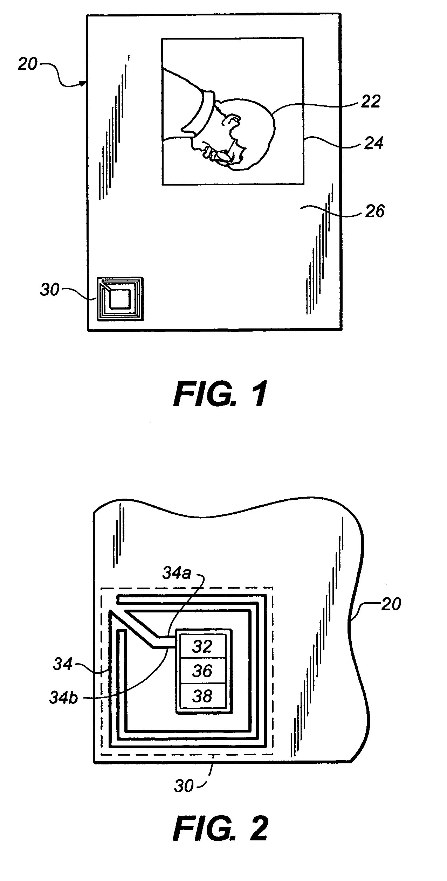

Fig. 1 shows a plan view of medium 20 having content bearing elements 22 thereron comprising recording 24. Elements 22 can comprise for example, text, drawings, images or other content that can be recorded using medium 20. By way of example only, and not by way of limitation, medium 20 can comprise any of a paper, rag, fabric, film, cardboard, textile, vinyl, or other material upon which elements 22 can be formed. Conventional methods of recording can be used to record elements 22 on medium 20 such as applying ink, dye or toner to medium 20. Where medium 20 is a photosensitive film, element or paper, known exposure methods can be used to expose the photosensitive film, element or other medium to a light source and to develop the respective film, element or other medium in a subsequent chemical process for creating an image on a medium 20. Although medium 20 is described in the following description as being in sheet form, it will be appreciated that a recording 24 can be made on other forms of medium 20 such as rolls or strips.

As is shown in Fig. 1, a transponder 30 is fixed to medium 20 in a manner that does not alter the content recorded in elements 22 of recording 24. This can be done as is shown, by positioning the transponder 30 on a side 26 of the medium 20 containing elements 22 but separated from elements 22 so as to not interfere with the process of extracting content from elements 22. Alternatively, transponder 30 can be positioned on a reverse side (not shown) of medium 20 or it can be incorporated into medium 20 (not shown).

Fig. 2 shows a close up view of transponder 30. As is shown diagrammatically in Fig. 2, transponder 30 includes a memory 32, a transponder antenna 34, radio frequency communication circuit 36 and a power supply circuit 38. Transponder 30 is shown attached to medium 20. Adhesive-tape backing or other attachment arrangement, can be used to join transponder 30 to medium 20 as described herein below. It is useful to note that similar methods of attachment to the medium 20 as described herein below may alternately be used to join transponder 30 to any type of medium 20 including but not limited to a medium 20, such as a photographic X-ray film or element.

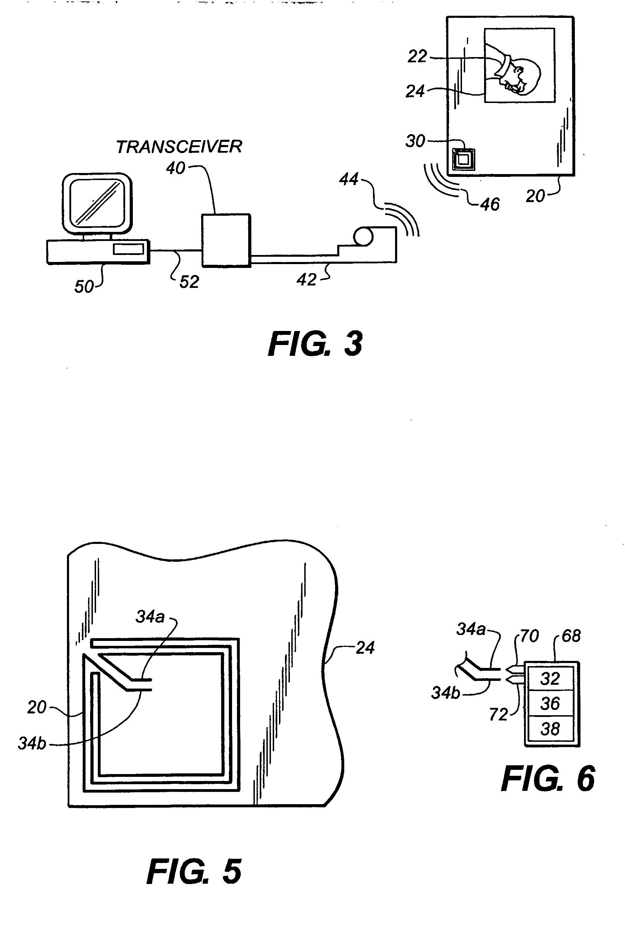

Fig. 3 shows, in schematic form, a system for associating annotations with recording 24, which has a transponder 30 attached thereto. In this arrangement, transceiver 40 is connected to a computer 50. Transceiver 40 also connects to an antenna 42. The transceiver 40 and antenna 42 serve as a memory interface allowing the computer 50 to communicate with memory 32. In one embodiment of the present invention, transceiver 40 is capable of transmitting a first electromagnetic field 44 of a first predetermined frequency, for reasons disclosed presently. Transceiver 40 is also capable of receiving a second electromagnetic field 46 of a second predetermined frequency, also for reasons disclosed presently. In another embodiment, transceiver 40 can use the same frequency for both first and second electromagnetic fields 44 and 46.

In a preferred embodiment, transponder 30 is a relatively low-power device having a power supply circuit 38 that derives its source power from the first electromagnetic field 44 emitted by transceiver 40. In this way, communication via antenna 42 between transceiver 40 and transponder 30 can take place over a limited distance. Alternatively, transponder 30 can be equipped with a power supply 38 such as a chemical battery or a capacitive energy storage unit.

Transceiver 40 is electrically coupled to computer 50, by means of a signal interface 52. Signal interface 52 may be, for example, a standard RS-232C serial connection, a Universal Serial Bus connection, or other type of signal interface known to those of skill in the art. This allows computer 50 to control the operation of transceiver 40 so that transceiver 40 can successively poll one or more transponders 30 in order to selectably access information about one or more recordings 24. Computer 50, which may be a standard personal computer or other programmable logic device is programmed to cause transceiver 40 to read data that is stored in memory 32 of transponder 30 and then to render an output based upon the stored data. Computer 50 can also cause transponder 30 to store data in memory 32 of a selected transponder 30.

It is important to note that computer 50 may alternately be joined with transceiver 40 in the form of a unitary "hand-held" device. Using this alternate arrangement, an operator can associate information with transponder 30 fixed to recording 24 or decode information that has already been stored in the memory 32 of such a transponder 30 without requiring connection to a separate computer. This arrangement would be advantageous, for example, for portable data gathering or annotation purposes. As will be discussed in greater detail below, other forms of reading and rendering devices are contemplated, an important feature of which is the ability to make available the content of the recording 24 and the content of the annotations. This can be done, for example by rendering an output image that combines the original content data and the annotation data.

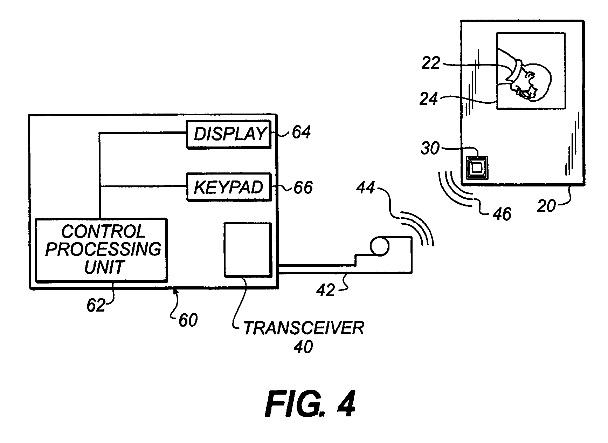

Fig. 4 schematically shows an embodiment of such a hand-held device 60. For this configuration of the invention, control-processing unit 62 performs logic control functions necessary to operate transceiver 40, which communicates with transponder 30 joined to recording 24 in the same manner as described above with reference to Fig. 2. A display 64 can comprise a liquid crystal display, an organic light emitting display, or other type of display that is well known in the electronics instrumentation art. Display 64 can be used for example to present an output image that displays information read from transponder 30.

A data entry device 66 such as a keyboard, touchpad, keypad, stylus, mouse or voice recognition apparatus allows the entry of annotation data. Processor 68 causes this annotation data to be recorded in memory 32 of transponder 30.

### Communication between Transponder and Transceiver

Referring to Figs. 1-4, it is instructive to discuss in detail how transceiver 40 communicates with transponder 30. Transponder 30 is tuned to a first frequency of a first electromagnetic field 44 emitted by transceiver 40. By way of example only, but not by way of limitation, first electromagnetic field 44 is in the radio frequency range of the electromagnetic spectrum. In this manner, the invention uses a transceiver 40 and transponder 30 tuned to a radio frequency. However, the first electromagnetic field 44 and/or second electromagnetic field 46 need not be in the radio frequency range; rather, the first electromagnetic field 44 and/or second electromagnetic field 46 may be at a microwave frequency or at other useful frequencies known to those of ordinary skill in the art.

Upon receiving a first electromagnetic field 44 from transceiver 40, transponder power supply circuit 38 obtains, from the first electromagnetic field 44, sufficient energy to provide source voltage for use in generating a response to the first electromagnetic field. Thus, no battery is needed to separately power transponder 30.

The first electromagnetic field 44 can contain a store instruction accompanied by data such as original content data or annotation data. When transponder 30 receives the store instruction, transponder 30 stores accompanying data in memory 32 associated with transponder 30. Where memory 32 stores data in separately addressable pages, the store instruction can select a particular page for the storage of particular data. Further, the store instruction can include a locking instruction to prevent future modification or alteration of the data stored in a particular page of memory 32.

The first electromagentic field 44 can also contain a send instruction which causes transponder 30 to generate a second electromagnetic field 46 containing data that is stored in memory 32. The send instruction can include a page identifier to cause transponder 30 to generate a second electromagnetic field 46 that contains only the contents of selected pages of memory 32.

When transceiver 40 communicates with more than one transponder 30, each transponder 30 is preferably individually programmed with a unique identifying address code (ID). To communicate with a selected one transponder 30, transceiver 40 encodes the unique identifying address code as part of its first electromagnetic signal 44, along with a send command data from a store command. The transponder 30, having the appropriate address responds to transceiver 40 by transmitting data stored in memory 32 to transceiver 40 or stores additional information in memory 32 as is appropriate. Alternatively, where transceiver 40 communicates with more than one transponder 30, each transponder 30 can be adapted to respond only to a first electromagnetic field 44, having a predefined frequency. In this alternative embodiment, transceiver 40 can selectably communicate with a single transponder 30 by transmitting a first electromagnetic field 44 at a frequency that is associated with only that transponder 30. Storage facility transceiver 94 can be used to poll a collection of multiple mediums 30, each having an attached transponder 30, and to locate and communicate with a specific medium 30 in the collection. As noted above, this can be accomplished by recording a transponder ID number in each transponder 30 and then polling each transponder 30 until the transponder 30 having the appropriate ID number is located.

Another alternative polling technique employs a "non-collision" algorithm for communicating with more than one transponder 30. According to one embodiment, the algorithm uses a loop that proceeds in steps to increase the output power used to generate the first electromagnetic signal from an initial relatively low value transceiver 40 repeatedly polls for a particular one transponder 30. As soon as it detects a transponder 30, transceiver 40 communicates with the transponder 30, and then temporarily disables the transponder 30. Transceiver 40 then sequentially repeats polling in this fashion, incrementing its output power level with each polling operation, to locate, communicate with, and then temporarily disable the next available transponder 30. In this way transceiver 40 communicates with multiple transponders 30 in order of their return signal strength, until each transponder 30 has been contacted.

This polling capability facilitates archiving, where multiple recordings 24 might be included in a cabinet, desk or other storage facility. This same capability would, for example, automate scanning of a collection of recordings 24, such as where multiple recordings 24 are collected in a folder, file or cabinet, to determine if a desired recording 24 is in that folder, file or cabinet.

### Methods for Associating a Transponder with the Original Recording

In one embodiment described above, transponder 30 is provided on adhesive-backed material for attachment to the medium 20. However, other methods of attachment are possible for transponder 30 within the scope of the present invention. For example, as one method of attachment, transponder 30 can be laminated onto medium 20. That is, medium 20 comprising the recording 24, will undergo a lamination process during final preparation with transponder 30 being laminated to medium 20.

Alternately, transponder 30 can be embedded within medium 20 as during a manufacture of medium 20 or during preparation of medium 20 for imaging. In this regard, transponder 30 may be embedded within, for example, layers of paper of a paper type medium 20 or within the film substrate used for an X-ray or other diagnostic image. Where transponder 30 is joined to medium 20 in this fashion, information such as data characteristic of the composition, type of medium, and recommended method for processing of medium 20 can be stored in memory 32 of transponder 30 and later be used by an image forming device to optimize the appearance of image elements 22 formed on medium 20 when a recording is made.

In the embodiment of Figs. 1 - 4, transponder antenna 34 is packaged with transponder 30. However, transponder 30 can also be formed by combining a transponder antenna 34 (Fig. 5) and a separate transponder circuit package 68. (Fig. 6), with the separate transponder circuit package 68 having a memory 32, radio frequency communications circuit 36, and a power supply circuit 38.

Fig. 5 shows a trace pattern of transponder antenna 34 provided on medium 20. In the embodiment of Fig. 5, transponder antenna 43 comprises a pair of transponder antenna contacts 34a and 34b which are accessible for connection to radio frequency communication circuit 36 which provides a mating pair of circuit contacts 70 and 72. Alternately, transponder antenna 34 can be embedded within medium 20, with antenna contacts 34a and 34b extended to the surface of medium 20 for connection with circuit contacts 36a. In still another embodiment, transponder antenna 34 can be embedded in medium 20 and circuit contacts 70 and 72 can be pressed into medium 20 to join with antenna contacts 34a and 34b. In the latter embodiment, circuit contacts 70 and 72 can be pressed through antenna contacts 34a and 34b and then deformed to grip medium 20 so as to effectively staple or rivet medium 20, transponder antenna 34 and transponder circuit package 68 together.

It will be appreciated that other methods of associating a transponder with the recording can be used. For example, a transponder 30 can be provided within a medium 20 used for the original recording. Further, transponder 30 can be formed on medium 20 itself using lithographic, ink jet and other technologies that permit electronic circuits to be formed on a substrate.

### Programming the memory and memory contents

Memory 32 of transponder 30 is adapted to receive information of at least two types: digital data representing the content recorded in elements 22 of recording 24 referred to hereafter as recorded content data and digital data representing annotations referred to hereafter as annotation data. The recorded content data can be in any useful digital form that can be reconstituted to form an output that conveys the content of recording 24. Preferably, the recorded content data is compressed or otherwise encoded so as to reduce the portion of memory 32 required for storing the recorded content data. Annotation data is data that can be stored in association with the recorded content data and that digitally represents markings, editing instructions, audio content, video content or other content that is to be associated with recording 24.

An embodiment of one possible data structure that can be used in memory 32 of transponder 30 is shown in Table 1.

**Table 1. Data Stored in Transponder 30**

| **Page** | **Data Stored** | **Description** |
|---|---|---|
| 1 | Medium Data | Data regarding characteristics of medium e.g., density color gamut, sensitivity. |
| 2 | Medium ID Data | Identifies characteristics of medium, identity of subject of recording etc. |
| 3 | Recorded Content Data | Digital Data Representing Recorded Content. |
| 4 | Annotation Data 1 | Digital Data Representing First Annotation. |
| 5 | Annotation Data 2 | Digital Data Representing Second Annotation. |
| 6 | Annotation Data 3 | Digital Data Representing Third Annotation. |
| N | Annotation Data n | Digital Data Representing nth Annotation. |

As shown in Table 1, memory 32 is partitioned into multiple pages. Each page can be separately addressed by transceiver 40 in the manner described above. In the embodiment of Table 1, page 1 of memory 32 contains medium data which includes data regarding characteristics of medium 20 such as the density of the medium, the color gamut of the medium and/or other information that can affect the content conveyed by the elements 22 recorded on medium 20 such as the relative sensitivity of the medium to concentrations of applied donor materials such as ink or to exposure to light, or heat. The latter characteristics are useful where the medium 20 is photosensitive or thermally sensitive. This information can be used to adjust the operation of a device such as a printer that records elements 22 on medium 20 to ensure that the content recorded in the form of elements 22 accurately represents the intended content.

Page 2 of memory 32 contains medium ID data such as data that identifies the subject of the recording on the medium, the date that the recording was made, the characteristics of the recording such as exposure conditions, characteristics of a donor material such as an ink, toner or dye used to record elements 22 and the time and date that elements 22 were recorded on medium 20. Other information such as a document identification number, patient identification number, patient name, and information indicating routing and distribution of this information can also be stored on page 2.

Page 3 contains recorded content data. Preferably, the recorded content data is appropriately transformed into a digital form that occupies a relatively low portion of the capacity of memory 32. For example, known data compression techniques can be applied to the recorded content data. However, care must be taken to ensure that no vital data is lost in the transformation. Preferably, page 3 is locked after the recorded content data has been stored. By locking page 3 of memory 32 subsequent users of the transponder 30 are blocked from modifying altering or deleting the contents of the recorded content data. This locking feature can be used for two purposes. The first purpose is to provide a representation of the original recording that can be checked against the content of the recording 24 to ensure that the content of the recording 24 has not been altered. The second purpose is to provide users with access to the content of the recording without having to physically access recording 24. Thus, this embodiment of the present invention is not necessary to remove recording 24 from a storage facility in order for a user to obtain the content of recording 24.

Pages 4 - n of memory 32 contain annotation data. Annotation data, as described above, is digital data that represents an annotation to be associated with recording 24. As noted above, the annotations can comprise a text message, an image, digitized forms of markings, digitized audio, and/or digitally encoded video signals. The annotation data can be accessed remotely in the same manner as recorded content data. Accordingly, it is possible for user to remotely review the recorded content data and any existing annotation data despite not having access to the recording 24 itself. Further, it is possible to record additional annotations for storage in memory 32. It will be appreciated that this can be done remotely and without the preparation of additional recordings (not shown) that must be physically associated with recording 24.

It will be appreciated that, in accordance with the present invention, in the event that recording 24 is physically transferred, the recorded annotations travel with recording 24 by virtue of the physical association of transponder 30 and recording 24. Thus, to the extent the original recording 24 is transferred to a remote user, the recorded annotations are available to such a user without risk of loss or separation.

Any of pages 4 - n memory 32 can be selectively locked to prevent unauthorized modification to an annotation. In a preferred embodiment, the author of an annotation can assign a key to a locked page of annotation data. This key permits the author or other person having access to the key to unlock the locked page of annotations in order to permit correction of an annotation or other modification of an annotation. Although not required, memory 32 can be defined so that changes and alterations to the contents of any page of memory can be tracked. Such tracking data itself can be stored on a locked page of memory 32 to prevent unauthorized modification or alteration.

Table 2 shows an embodiment of memory 32 allocated into multiple pages of storage.

**Table 1. Data Stored in Transponder 30**

| **Page** | **Data Stored** | **Description** |
|---|---|---|
| 1 | Medium Data | Data regarding characteristics of medium e.g., density color gamut, sensitivity. |
| 2 | Medium ID Data | Identifies characteristics of medium, identity of subject of recording etc. |
| 3 | Recorded Content Data | Digital Data Representing Recorded Content. |
| 4 | Recorded Content Grid Data | Associates Recorded Content Data with Grid Coordinate System |
| 5 | Annotation Data 1 | Digital Data Representing First Annotation. (Optionally references grid coordinates) |
| 6 | Annotation Data 2 | Digital Data Representing Second Annotation. (Optionally references grid coordinates) |
| N | Annotation Data n | Digital Data Representing nth Annotation. (Optionally references grid coordinates) |

As shown in Table 1, memory 32 is partitioned into multiple pages. Each page can be separately addressed by transceiver 40 in the manner described above. In the embodiment of Table 1, page 1 of memory 32 contains medium data which includes data regarding characteristics of medium 20 such as the density of the medium, the color gamut of the medium and/or other information that can affect the content conveyed by elements 22 recorded on medium 20 such as the relative sensitivity of the medium to concentrations of applied donor materials such as ink or exposure to light or heat. The latter characteristics are useful where the medium 20 is photosensitive or thermally sensitive. This information can be used to adjust the operation of a device such as a printer that records elements 22 on medium 20 to ensure that the content recorded in the form of elements 22 accurately represents the intended content.

Page 2 of memory 32 contains medium ID data such as data that identifies the subject of the recording on the medium, the date that the recording was made, the characteristics of the recording such as exposure conditions, characteristics of a donor material such as an ink, toner or dye used to record elements 22 and the time and date that elements 22 were recorded on medium 20. Other information such as a document identification number, patient identification number, patient name, and information indicating routing and distribution of this information can also be stored on page 2.

Page 3 contains recorded content data. Preferably, the recorded content data is appropriately transformed into a digital form that occupies a relatively low portion of the capacity of memory 32. For example, known data compression techniques can be applied to the recorded content data. However, care must be taken to ensure that no vital data is lost the transformation. Preferably, page 3 is locked after the recorded content data has been stored. By locking page 3 of memory 32 subsequent users of the transponder 30 are blocked from modifying altering or deleting the contents of the recorded content data. This locking feature can be used for two purposes. The first purpose is to provide a representation of the original recording that can be checked against the content of the recording 24 to ensure that the content of the recording 24 has not been altered. The second purpose is to provide users with access to the content of the recording without having to physically access recording 24. Thus, this embodiment of the present invention is not necessary to remove recording 24 from a storage facility in order for a user to obtain the content of recording 24.

Page 4 of the embodiment of table 2 contains a recorded content grid data. This recorded content grid data associates the recorded content data with a grid coordinate system. The grid coordinate system provides convenient geographic reference within the original content data to permit annotation of selected areas of the original content data and so as to facilitate highlighting and editing of the same. For example, where the original content of recording 24 is a map image, the grid coordinate system can be used to associate portions of the map with particular coordinates. These coordinates can be referenced in later annotations and editing instructions so that the appropriate portions of the recorded content are identified and properly annotated or edited. In this regard, it will be appreciated that pages 5 - n of memory 32 of Table 2 contain annotations data which includes optional grid coordinate references. These grid coordinate references can identify either a particular point in the grid as a starting point for editing and annotation data or can identify a set of grid positions so as to define a region within the original content that is to be associated with an annotation or that is to be edited.

Within the scope of the present invention are any number of possible arrangements of memory contents, as indicated in the exemplary description for Tables 1 and 2 hereinabove. Any one of known digital data encoding methods could be used to compress stored data in memory. Where it is advantageous to store more information than can be contained on a single transponder 20, multiple transponders can be affixed to the medium 20.

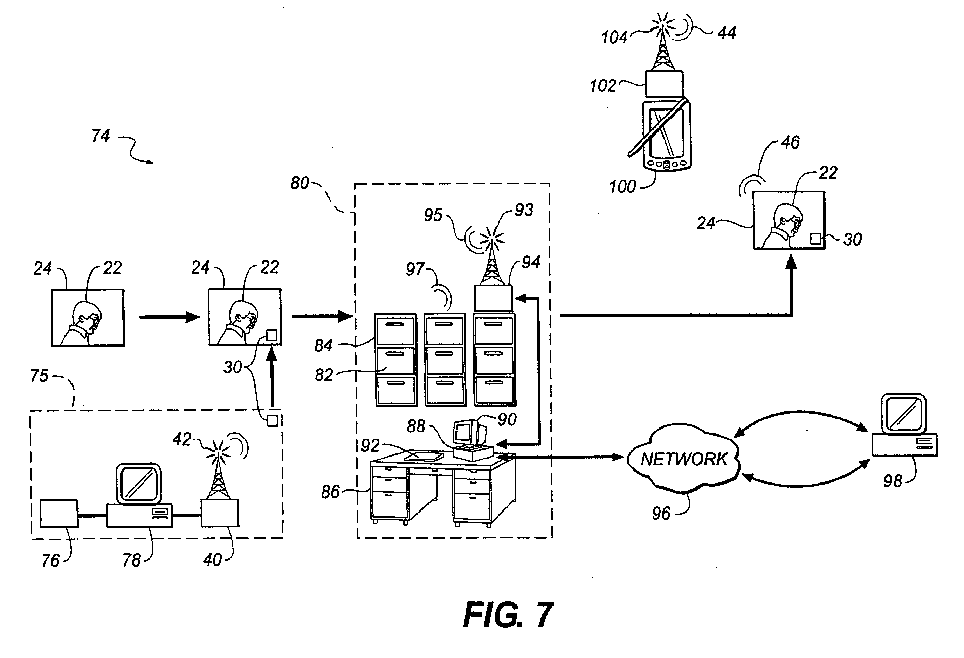

Fig. 7 shows a representative diagram of a preferred embodiment of a system 74 in accordance with the present invention. As is shown in Fig. 7, system 74 comprises an input system 75, a storage system 80, a network 96, a local processing station 88, a remote processing station 98, and second remote processing station 100. Input system 75 has an input device 76 that obtains content from original recording 24. Input device 76 can comprise known information capture devices such as a scanner, a digital video image capture device, an analog video image capture with digital converter, a digital still camera, a facsimile device, and any other device known in the image capture arts for capturing data that represents elements 22 recorded on a recording 24. Because it is increasingly common for recording 24 to be made by printing or otherwise recording the content of a digitally encoded file such as a word processing file, a graphics file, and an image file on medium 20, input device 76 can comprise a network or computer or other device that obtains the digitally encoded file used in making the recording.

Input system 75 also has an input processor 78 such as a personal computer. It will be appreciated that other forms of processors including servers, hand held devices and including conventional and custom signal processors can be used. Input processor 78 receives recorded content data from input device 76 and can also receive annotation data from the operator of input processor 78. Input processor 78is connected to a transceiver 40 that transmits a first electromagnetic field 44 to a transponder 30. Transponder 30 is joined to recording 24 in the manner described above.

A storage system 80 is provided for receiving the transponder 30 and recording 24. In the embodiment of Fig. 7, storage system 80 comprises for example, at least one drawer 82 for receiving recording 24. Drawer 82 can conveniently be located in a cabinet 84 or desk 86. In the embodiment of Fig. 7, a storage facility processor 88 is provided at desk 86 and has a display 90 and keyboard 92. Storage facility processor 88 is further connected to a storage facility transceiver 94 that communicates with a selected transponder 30 by way of antenna 93, transceiver signal 95 and transponder signal 97 to controllably store or extract original content data and/or annotation data with the memory 32 of the selected transponder 30. An operator can use keyboard 92 to cause storage facility processor 88 to extract recorded content data and any annotation data stored in a transponder 30 associated with a selected recording 24 and to display this extracted data on an output device such as display 90. Storage facility processor 88 then presents on display 90, output that is based upon the content of the recorded content data and the annotation data extracted from the memory 32 of the transponder 30 located within storage system 80. The operator can then enter additional annotations that storage facility processor 88 causes to be stored in the memory 32 of the transponder 30 associated with the selected recording 24.

### Remote Annotation of Stored Recording

In the embodiment of Fig. 7, storage facility processor 88 also serves as a gateway between storage facility transceiver 94 and remote processors 98 that are connected to the storage facility processor 88 by way of the communication network 96. In this role, storage facility processor 88 receives requests to access original content data and/or annotation data that is stored in the memory 32 of a transponder 30 that is joined to a selected recording 24 stored in storage facility 80, accesses this data and packages this data for transmission to the remote processors 98. In this role, storage facility processor 88 also receives requests to store additional annotation data on the memory 32 of the transponder 30 that is joined to the selected recording 24, processes this data for storage in the memory 32 and causes storage facility transceiver 94 because this data to be stored in the selected memory 32. In this way, remote users can access the content of a recording 24, annotations that are associated with recording 24 and can further generate additional annotations to the associated with recording 24.

It will be appreciated that, in an alternative embodiment of the present invention, storage facility transceiver 94 can be adapted to directly connect to network 96 so that storage facility transceiver 94 can be remotely operated by remote processors 98.

### Remote Annotation of Recording

As is also shown in Fig. 7, it will be appreciated that a recording 24 can be physically removed from storage facility 80 and physically conveyed to a remote user such as a physician at a hospital that is, for example, not connected to be storage facility 88 by way of network 96. For this physician to access the original content data and annotations, the remote physician is provided with processor 100 such as a pen computer having an attached transceiver 102 and antenna 104. The processor 100 exchanges data with the transponder 30 so that processor 100 can display both the original content data and annotations for review by the physician at the other hospital. Further, the remote physician can by way of processor 100 and transceiver 102 store additional annotations in transponder 30. In this way, the bearer of recording 24 has access to both recording 24 and any associated annotations and, further, can record additional annotations that will travel with recording 24 but do not require either the storage of additional medium with recording 24 or the marking of recording 24.

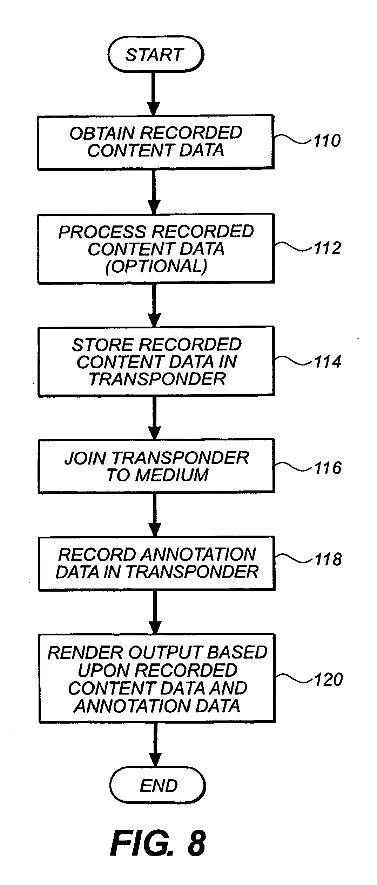

Fig. 8 shows a flow diagram of an embodiment of a method of the present invention, using system 74. In this embodiment, recorded content data is obtained by capturing the content contained in elements 22 of recording 24. (step 110) In this embodiment, the recorded content data can be further processed (block 112). For example, where the recorded content data is obtained by capturing an image of element 22, the captured image can be improved by applying algorithms to the recorded content data to correct variations that may have occurred during the image capture process so that recorded content data derived therefrom more accurately represents the content of the original recording 24. Improvements of this type can include image manipulation sequences such as are described by EP-A-0 961,482 (Buhr et al.), EP-A-0 961,483 (Buhr et al.), EP-A-0 961,484 (Buhr et al.), EP-A-0 961,485 (Buhr et al.) and EP-A-0 961,486 (Buhr et al.) Additional image manipulation may be used including, but not limited to, scene balance algorithms (to determine corrections for density and color balance based on the densities of one or more areas within the processed film), tone scale manipulations to amplify film underexposure gamma as described in US-A-5,134,573 (Goodwin et al.), non-adaptive or adaptive sharpening via convolution or unsharp masking, red-eye reduction, and non-adaptive or adaptive grain-suppression. Besides digital manipulation such further image processing can be used to change physical characteristics of the image, such as "windowing" and "leveling" (used in computed tomography scanning) or other manipulations known in the art.

The recorded content data can also be further processed to ensure that the recorded content data can be stored within the storage capacity limitations of memory 32. Preferably, so-called "loss less" compression algorithms known by those of ordinary skill in the art can be used for this purpose. Alternatively, so-called lossy compression algorithms can also be used. Lossy algorithms can advantageously be used where the limitations of the systems used to observe or render output images based upon the stored and compressed original image data are limited. For example, if it is known that the recorded content data will be observed using video or printing technology having a predetermined resolution that is lower than the resolution of elements 22 on recording 24, then lossy image recording algorithms can be used advantageously. However, it will be recognized that, in certain circumstances, it will be necessary to store more information than can be contained in memory 32 of a single transponder 30. When this occurs, more than one transponder 30 can be affixed to recording 24 to increase the data storage capacity that is associated with an image.

After the recorded content data is obtained (step 110) and optionally further processed (step 112) the recorded content data is stored in memory 32 of transponder 30. (step 114) In a preferred embodiment of the present invention, a feature of transponder 30 is its ability to temporarily disable a device or to lock individual memory pages in memory 32. As described above, this feature prevents erasure and loss of recorded content data.

The transponder 30 is joined to medium 20 used for recording 24. (block 116) This can occur at any time before or after recording 24 is made. However, it is particularly advantageous to join transponder 30 to recording 24 as soon as practical so as to reduce the risk that transponder 30 will be mistakenly joined to the wrong recording 24. Annotation data stored in transponder 30 before or after transponder 30 is joined to recording 24 (block 118).

### Rendering Output Based Upon Content Of Recording and Annotations

In accordance with the present invention, an output is rendered based upon the recorded content and any annotations associated with recording 24. (block 120) In a first embodiment, this is done in electronic form. In this regard, a device such as a personal computer, handheld reader, or other electronic device can be provided and adapted to extract recorded content data, annotation data, and other data from memory 32 as described above. In one embodiment, the output device can comprise a display or a printer that presents the recorded content and annotation data. For example, where the recorded content comprises an image and the annotation data comprises text annotations of the image, the display of the output device can present both the image and annotations. Similarly, where the recorded content comprises written data such as the results of a diagnostic or other scientific test and the annotations comprise audio data, output device can provide an audio signal generator that an audio output reflecting the content of the annotations.

In another embodiment, the output device can comprise a personal computer, handheld reader, or other electronic device having a display or another output means such as a printer that renders an output comprising the recorded content modified in accordance with the annotations. For example where the recorded content comprises a photograph of a crime scene, annotations regarding revocation and content of important evidence in the scene can be overlayed onto the image of the crime scene so that an integrated output product is formed. Similarly, where the recorded content comprises for example, a written text, the output device can receive the recorded content data in annotations containing instructions for editing the written text and can, on the basis of this received data render an output that reflects the recorded content has edited in accordance with the editing instructions.

It will be appreciated that, certain recordings 24 are preferably viewed in the original form. However, it is also useful for such recordings used in association with annotations. An example of this can comprise a medical image such as a CAT scan. Where it is desired to permit the user to view recording 24 and also view, in the context of the original recording, annotations regarding recording 24 output device can comprise a projector type display which, when positioned in alignment with recording 24 extracts data from transponder 30 and generates a projected image which is aligned with and projected onto recording 24 so that the annotations appear concurrently with recording 24 and yet do not modify the appearance of recording 24. In this way, a minute medical condition evidenced in, for example, a recording 24 of a CAT scan can be highlighted for observation without risking modification of the appearance of the CAT scan to accommodate the marking.

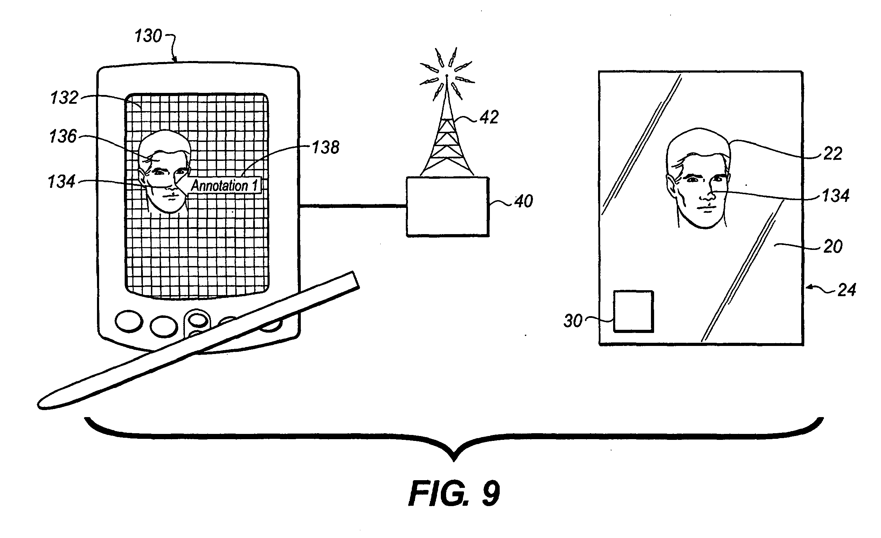

Fig. 9 shows an embodiment of a projector system 130 which applies the projected image of annotation data to the rear of a recording 24. This latter embodiment is useful where the medium 20 is of a translucent or transparent nature such as, x-ray. It will be understood that use of recorded content great data information can be helpful in aligning and presenting the annotations information in either of these embodiment. Fig. 9, also shows a background of a coordinate grid which is used to position an annotation 138 of Fig. 9 in a proper relation with the nose 110 of a face 112 in recording 24.

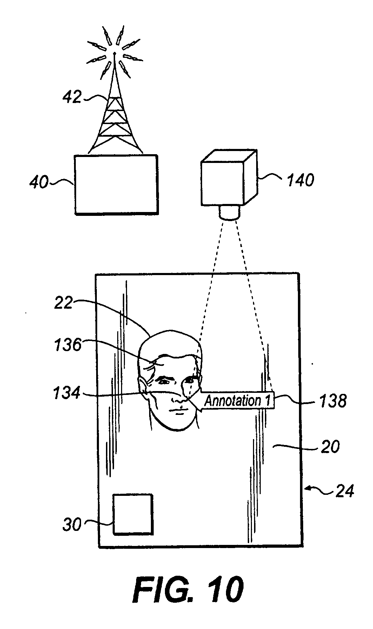

Fig. 10 shows an embodiment of a front projector display system 142 of this type which applies the projected image to the front of the original recording and is useful for the original recording 24 is formed on the medium 20 that is generally reflective in nature such as a paper.

Where the annotation data includes editing instructions the projector systems 130 and 142 of Figs. 9 and 10 can display an image that represents the appearance of the recorded content data as modified by the editing instructions. In this regard, where the nature of the edits permits such a display can be presented by projecting the edited image through onto the original image as discussed above. However, where the editing instructions call for significant changes, it may be necessary to provide a projected output that is not projected onto recording 24, but rather is projected onto a screen or other image receiving surface. In such a circumstance an output image is formed based upon the recorded content data and editing instructions. The output image is then displayed, printed by a conventional printer (not shown) or otherwise rendered.

Finally, where annotation data includes audio signal devices such as computer 50, handheld device 60, storage facility processor 88, remote processor 98, or projector 130 or 140 can be adapted with appropriate electronic circuits for converting audio signals into annotation data for storage in a memory 32 of a transponder 30 and for converting such audio annotation data into audio signals.

It will be appreciated that the embodiments of the present invention shown and described above incorporate a transceiver arrangement as a memory interface for exchanging data with a memory 32 joined to a medium 20. It will be appreciated that a memory 32 without a transponder 30 can also be used in conjunction with the present invention. In such an embodiment a wire or optical fiber based data path, infrared light based communication path or another connection can be used to exchange data with a memory 32. In such embodiments the memory interface can comprise an appropriate transducer for converting data and control signals into a form that can be used to store data and extract data from memory 32.

Therefore, what is provided is a medium having information associated with the medium stored in a memory coupled to the medium.

The invention has been described in detail with particular reference to certain preferred embodiments thereof, but it will be understood that variations and modifications can be effected within the scope of the invention.

## Claims

1. A method for annotating a content bearing medium having content bearing elements recorded on the medium by printing or exposure and, further having a memory on the medium for storing data in an electronic form, the method **characterized by** the step of:
(a) obtaining data representing the content (22) borne on the medium (20);
(b) storing data representing the content borne on the medium in the memory (30) of the medium;
(c) conveying the data stored in the memory to a local transceiver (40) in response to a first radio frequency signal generated by the local transceiver and then transmitting the data across a communication network (96) from the location of the transceiver to a remote processor (98) that is at another location remote from the medium and the transceiver.
(d) obtaining annotation data from the remote location at the transceiver; and,
(e) storing the remotely obtained annotation data in the memory by causing the transceiver to generate a second radio frequency signal that causes the remotely received annotation data to be stored in the memory.

2. The method of claim 1, further comprising the step of presenting an output incorporating the annotation data.

3. The method of claim 2, wherein the annotation data comprises editing instructions and the step of presenting an output incorporating the annotation data comprises the step of presenting an output that reflects the content borne on the medium as modified by the editing instructions in the annotation data.

4. The method of claim 2, wherein the step of presenting an output incorporating the annotation data comprises the steps of providing an output that is superimposed onto the content bearing medium so that the annotation data can be observed without modification of the content bearing medium.

5. The method of claim 2, wherein the step of presenting an output incorporating annotation data comprises the steps of extracting annotation data from the memory and rendering an audio output based upon the annotation data.

## Patentansprüche

1. Verfahren zum Versehen eines inhalttragenden Mediums mit Anmerkungen, wobei das Medium inhalttragende Elemente aufweist, die durch Aufdruck oder Belichtung auf das Medium aufgezeichnet werden, und mit einem Speicher auf dem Medium zum Speichern von Daten in elektronischer Form,
**gekennzeichnet durch** die Schritte:
a) Erhalten von Daten, welche den Inhalt (22) auf dem Medium (20) darstellen;
b) Speichern der den Inhalt auf dem Medium darstellenden Daten im Speicher (30) des Mediums;
c) Übertragen der im Speicher gespeicherten Daten zu einem lokalen Sender-Empfänger (40) in Abhängigkeit von einem ersten, vom lokalen Sender-Empfänger erzeugten Hochfrequenzsignal und Übertragen der Daten über ein Kommunikationsnetzwerk (96) vom Ort des Sender-Empfängers zu einem entfernten Prozessor (98), der sich an einem anderen Ort befindet, entfernt vom Medium und vom Sender-Empfänger;
d) Erhalten von Anmerkungsdaten vom entfernten Ort am Sender-Empfänger; und
e) Speichern der aus der Ferne erhaltenen Anmerkungsdaten im Speicher, indem der Sender-Empfänger zum Erzeugen eines zweiten Hochfrequenzsignals veranlasst wird, welches bewirkt, dass die aus der Ferne erhaltenen Daten im Speicher gespeichert werden.

2. Verfahren nach Anspruch 1, mit dem Schritt des Präsentierens einer Ausgabe, welche die Anmerkungsdaten enthält.

3. Verfahren nach Anspruch 2, worin die Anmerkungsdaten Editieranweisungen enthalten und der Schritt des Präsentierens einer die Anmerkungsdaten enthaltenden Ausgabe den Schritt des Präsentierens einer Ausgabe umfasst, die den Inhalt auf dem Medium so wiedergibt, wie er durch die Editieranweisungen in den Anmerkungsdaten modifiziert worden ist.

4. Verfahren nach Anspruch 2, worin der Schritt des Präsentierens einer die Anmerkungsdaten enthaltenden Ausgabe den Schritt des Bereitstellens einer Ausgabe umfasst, die das inhalttragende Medium überlagert, so dass die Anmerkungsdaten ohne Modifizierung des inhalttragenden Mediums betrachtet werden können.

5. Verfahren nach Anspruch 2, worin der Schritt des Präsentierens einer Anmerkungsdaten enthaltenden Ausgabe den Schritt des Extrahierens von Anmerkungsdaten aus dem Speicher umfasst und das Wiedergeben eines Audioausgangs auf der Grundlage der Anmerkungsdaten.

## Revendications

1. Procédé pour annoter un support portant un contenu ayant des éléments portant un contenu enregistrés sur le support par impression ou exposition et comprenant aussi une mémoire sur le support pour stocker des données sous forme électronique, le procédé étant **caractérisé par** les étapes de :
a) obtention des données représentant le contenu (22) porté sur le support (20) ;
b) stockage des données représentant le contenu porté sur le support dans la mémoire (30) du support ;
c) transfert des données stockées dans la mémoire vers un émetteur-récepteur local (40) en réponse à un premier signal radiofréquence généré par l'émetteur-récepteur local, puis transmission des données sur un réseau de communication (96) depuis le site de l'émetteur-récepteur vers un processeur distant (98) qui se trouve au niveau d'un autre site distant du support et de l'émetteur-récepteur.
d) obtention des données d'annotation du site distant au niveau de l'émetteur-récepteur ; et,
e) stockage des données d'annotation obtenues à distance dans la mémoire en provoquant la génération d'un deuxième signal radiofréquence par l'émetteur-récepteur qui entraîne le stockage dans la mémoire des données d'annotation reçues à distance.

2. Procédé selon la revendication 1, comprenant aussi l'étape de présentation d'une sortie incorporant les données d'annotation.

3. Procédé selon la revendication 2, dans lequel les données d'annotation comprennent des instructions d'édition et l'étape de présentation d'une sortie incorporant les données d'annotation comprend l'étape de présentation d'une sortie qui reflète le contenu porté sur le support tel que modifié par les instructions d'édition comprises dans les données d'annotation.

4. Procédé selon la revendication 2, dans lequel l'étape de présentation d'une sortie incorporant les données d'annotation comprend les étapes de production d'une sortie qui est superposée sur le support portant le contenu de sorte que les données d'annotation puissent être observées sans modification du support portant le contenu.

5. Procédé selon la revendication 2, dans lequel l'étape de présentation d'une sortie incorporant les données d'annotation comprend les étapes d'extraction des données d'annotation de la mémoire et le rendu d'une sortie audio basée sur les données d'annotation.
